# EUROPEAN PATENT SPECIFICATION

(11) **EP 3 397 792 B1**
(45) Date of publication and mention of the grant of the patent: **29.12.2021**
(21) Application number: 16834157.6
(22) Date of filing: 29.12.2016
(51) Int. Cl.: C23C 30/00, B05D 5/08, B22D 17/20, B29C 33/60, B22C 3/00

(54) **BORON NITRIDE COATINGS FOR METAL PROCESSING AND METHODS OF USING THE SAME**
BORNITRIDBESCHICHTUNGEN ZUR METALLVERARBEITUNG UND VERFAHREN ZUR VERWENDUNG DAVON
REVÊTEMENTS EN NITRURE DE BORE POUR LE TRAITEMENT DES MÉTAUX ET LEURS PROCÉDÉS D'UTILISATION

(30) Priority: 29.12.2015 US 201562272307 P
(43) Date of publication of application: 07.11.2018
(73) Proprietor: Momentive Performance Materials Quartz, Inc., Strongsville, OH 44149 (US)
(72) Inventor: DANTAL, Barish, Strongsville, Ohio 44136 (US); RAMAN, Chandrashekar, Sheffield Village, Ohio 44035 (US)
(74) Representative: Gille Hrabal Partnerschaftsgesellschaft mbB Patentanwälte
(86) International application number: PCT/US2016/069071
(87) International publication number: WO 2017/117324

(56) References cited:
- EP-A1- 1 808 478
- WO-A1-2015/023919
- CN-A- 104 073 326
- JP-A- H03 114 525
- JP-A- 2004 035 579
- US-A- 4 927 587
- US-A1- 2012 058 923

## Description

### CROSS-REFERENCE TO RELATED APPLICATIONS

This application claims priority to U.S. Provisional Application No. 62/272,307 filed on December 29, 2015 entitled "Boron Nitride Coatings for Metal Processing and Methods of Using the Same".

### FIELD OF THE INVENTION

The present invention relates to a release agent and methods of using a release agent. In particular, the present invention relates to a release agent comprising boron nitride and a fumed metal oxide chosen from fumed alumina according to claim 1 for in metal processing applications.

### BACKGROUND OF THE INVENTION

Aluminum has been used as a prominent material by many industries, including the automotive and construction industries. Traditional metal aluminum alloys are not able to meet the desired mechanical properties for all purposes, such as those required by new automotive standards. As a result, to achieve better mechanical properties (e.g., ductility, strength, etc.) new low-iron aluminum alloys have been developed. Manufacturing molded articles using these low-iron aluminum alloys is difficult, however, because these alloys damage metal processing equipment such as the steel die casting equipment that is most commonly used to manufacture such articles. The low-iron aluminum alloys tend to stick (solder) to the steel die casting equipment and requires a higher release force. To minimize the sticking of the low-iron aluminum alloy, a significant amount of lubricant must be applied to the die surface. The use of excessive lubricant may cause fatigue of the die surface, especially when the surface is subjected to repeated heating by molten alloys at high casting temperatures. This fatigue results in fine cracks that produce corresponding raised veins on die castings.

Metal processing processes for ferrous and non-ferrous materials, such as forging, forming, and extrusion face similar challenges in their operations.

Existing release agents (e.g., lubricants) are commonly graphite or oil based and do not perform well above 600°C. The release force needed with these existing release agents is significant. Thus, there remains a need for an effective release agent for low-iron aluminum alloys. US 2012/058923 discloses a lubricating mold release agent of lubricant filler of e.g. boron nitride powder and of thixotrope of preferably fumed silica powder.

### SUMMARY

The present invention provides a release agent according to claim 1. The release agent allows for a significant decrease in the pull force required to remove an article from a die compared to conventional lubricants.

In another aspect, the present invention provides a substrate defining a surface, the substrate comprising a coating of the release agent disposed on at least a portion of the surface.

In still another aspect, the present invention provides a method for forming a shaped metal article comprising: providing an apparatus defining a mold cavity to form a shaped article, wherein a surface of the mold cavity comprises a coating of the release agent; supplying a metal to the mold cavity; forming a shaped article; and removing the article from the cavity.

In yet another aspect, the present invention provides a use for the release agent in a metal processing operation.

Any of the foregoing aspects or embodiments thereof may include the following features or any combination of two or more thereof, as long the requirements of claim 1 are fulfilled.
- The fumed metal oxide is chosen from fumed alumina.
- The fumed metal oxide has a surface area of of about 10 m²/g to about 500 m²/g; 10 m²/g to about 400 m²/g; 10 m²/g to about 300 m²/g; about 10 m²/g to about 200 m²/g; about 10 m²/g to about 100 m²/g; about 20 m²/g to about 400 m²/g; about 20 m²/g to about 300 m²/g; about 20 m²/g to about 200 m²/g; about 20 m²/g to about 100 m²/g; about 50 m²/g to about 300 m²/g; about 50 m²/g to about 200 m²/g; or about 50 m²/g to about 100 m²/g.
- The fumed metal oxide is present in an amount of about 20 wt.%, about 10 wt.%, about 5 wt.%, about 1 wt.%, about 0.5 wt.%, or about 0.01 wt.% of the release agent.
- The release agent comprises the fumed metal oxide in an amount of from about 0.01 wt.% to about 20 wt.%; 0.01 wt.% to about 15 wt.%; about 0.01 wt.% to about 10 wt.%; about 0.1 wt.% to about 20 wt.%; about 0.1 wt.% to about 15 wt.%, or about 0.1 wt.% to about 10 wt.% of the release agent.
- The fumed metal oxide particles have a surface area of from about 50 to about 400 m²/g, and the amount of boron nitride may be as low as about 10 wt.%, about 8 wt.%, about 6 wt.%, about 5 wt.%, even about 1 wt.%.
- The boron nitride is chosen from hexagonal boron nitride, platelet boron nitride, an agglomerate of boron nitride, or a combination of two or more thereof.
- The boron nitride comprises agglomerates of boron nitride having an average agglomerate size distribution of from about 10 µm to about 500 µm; 30 µm to about 125 µm; or about 10 µm to about 40 µm.
- The boron nitride comprises hexagonal boron nitride platelets having an aspect ratio of from about 5 to about 1000.
- The boron nitride comprises hexagonal boron nitride having a particle size of from about 0.1 µm to about 20.0 µm, about 0.1 µm to about 15 µm; about 0.1 µm to about 10 µm, about 0.5 µm to about 15 µm, about 0.5 µm to about 10 µm; about 1.0 µm to about 20.0 µm, about 1.0 µm to about 15 µm, or about 1.0 µm to about 10 µm.
- The boron nitride has an average particle size of about 0.05 µm to about 500 µm; from about 0.5 µm to about 250 µm; from about 1 µm to about 150 µm; from about 5 µm to about 100 µm; even from about 10 µm to about 30 µm.
- The boron nitride loading in the release agent is about 0.1 wt.% to about 50 wt. %, 5 wt. % to about 45 wt. %, 10 wt. % to about 40 wt. %, or 15 wt. % to about 35 wt. %. of the total weight of the release agent. In on e embodiment, the boron nitride loading is from about 0.1 to about 30 wt.%; 1 to 20 wt. %; even 5 to 15 wt. % of the total weight of the release agent.
- The release agent further comprises a filler chosen from talc, graphite, alumina (Al₂O₃), water-soluble phosphate, colloidal silica, colloidal alumina, water-soluble phosphate salt (e.g., water-soluble magnesium phosphate), a silicate (e.g. potassium silicate, magnesium aluminum silicate) and/or molybdenum disulfide, SiO₂, ZnO, ZrO₂, CeO, TiO₂, mica, or a combination of two or more thereof.
- The release agent further comprises a wetting agent.
- The release agent comprises a silane-based wetting agent.
- The release agent comprises an aqueous carrier.
- The release agent further comprises a pigment chosen from a rutile, spinel, hematite, or phosphate pigment. Optionally, the pigment is substantially free of chromium compounds including, for example, trivalent chromium, hexavalent chromium or combinations thereof.

The following description discloses various illustrative aspects. Some improvements and novel aspects may be expressly identified, while others may be apparent from the description and drawings.

### DETAILED DESCRIPTION OF THE INVENTION

Reference will now be made to exemplary embodiments, examples of which are illustrated in the accompanying drawings.

As used herein, the words "example" and "exemplary" means an instance, or illustration. The words "example" or "exemplary" do not indicate a key or preferred aspect or embodiment. The word "or" is intended to be inclusive rather than exclusive, unless context suggests otherwise. As an example, the phrase "A employs B or C," includes any inclusive permutation (e.g., A employs B; A employs C; or A employs both B and C). As another matter, the articles "a" and "an" are generally intended to mean "one or more" unless context suggest otherwise.

The present invention provides a release agent according to claim 1.

Metal processing is the process of working with metals to create individual parts, assemblies, or large-scale structures and includes forging, extrusion, and casting. Boron nitride can be used in metal processing operations for both ferrous and non-ferrous metal alloys.

one embodiment, the release agent comprises a mixture of boron nitride powder and fumed alumina in a water-based solvent. These formulations can be achieved by simple mixing techniques in the lab and do not require specialized equipment for blending.

In one embodiment, the fumed metal oxide particles have a relatively high surface area. In one embodiment, the particles have a surface area of about 10 m²/g to about 500 m²/g; 10 m²/g to about 400 m²/g; 10 m²/g to about 300 m²/g; about 10 m²/g to about 200 m²/g; about 10 m²/g to about 100 m²/g; about 20 m²/g to about 400 m²/g; about 20 m²/g to about 300 m²/g; about 20 m²/g to about 200 m²/g; about 20 m²/g to about 100 m²/g; about 50 m²/g to about 300 m²/g; about 50 m²/g to about 200 m²/g; or about 50 m²/g to about 100 m²/g. In one embodiment, the particles have a surface area of about 50 m²/g, about 75 m²/g, about 100 m²/g, about 150 m²/g, about 200 m²/g, about 300 m²/g; about 400 m²/g, even about 500 m²/g. Here, as elsewhere in the specification and claims, numerical values can be combined to form new or non-disclosed ranges.

In one embodiment, the fumed metal oxide has a BET value of 10 m²/g to 300 m²/g and a particle size of less than 25 microns. Fumed metal oxides are produced using processes known in the art, in one example, the hydrolysis of suitable feed stock vapor (such as silicon tetrachloride for fumed silica) in a flame of hydrogen and oxygen.

The surface area of the fumed metal oxides may be measured by the nitrogen adsorption method of S. Brunauer, P. H. Emmet, and I. Teller, J. Am. Chemical Society, Volume 60, Page 309 (1938) and is commonly referred to as BET. In one embodiment, the fumed metal oxide has a BET of 20 m²/g to about 100 m²/g. In another embodiment, the fumed metal oxide has a mean particle size of 15 µm or less. In another embodiment, the fumed metal oxide has a mean particle size of less than 1.0 µm. In another embodiment, the fumed metal oxide has a mean particle size of 0.1-0.5 µm with a BET value of 10 m²/g to 500 m²/g.

In one embodiment, the fumed metal oxide is present in an amount of about 20 wt.%, about 10 wt.%, about 5 wt.%, about 1 wt.%, about 0.5 wt.%, or about 0.01 wt.%. In one embodiment, the composition comprises from about 0.01 wt.% to about 20 wt.%; 0.01 wt.% to about 15 wt.%; about 0.01 wt.% to about 10 wt.%; about 0.1 wt.% to about 20 wt.%; about 0.1 wt.% to about 15 wt.%, or about 0.1 wt.% to about 10 wt.%. In another embodiment, the fumed metal oxide is present in amount of about 0.5 wt.% to about 20 wt.%; about 0.5 wt.% to about 15 wt.%, or about 0.5 wt.% to about 10 wt.%.

The boron nitride employed in the release agent composition is not particularly limited and may be selected as desired. In particular, a variety of forms or morphologies of boron nitride can be used. In one embodiment, the boron nitride powder comprises hexagonal boron nitride, platelet boron nitride, an agglomerate of boron nitride, or a combination of two or more thereof.

The boron nitride powder may comprise crystalline or partially crystalline boron nitride particles made by processes known in the art. These include, but are not limited to spherical boron nitride particles in the micron size range produced in a process utilizing a plasma gas as disclosed in U.S. Pat. No. 6,652,822; hBN powder comprising spherical boron nitride agglomerates is formed from irregular non-spherical boron nitride particles bound together by a binder and subsequently spray-dried, as disclosed in U.S. Patent Publication No. 2001/0021740; boron nitride powder produced from a pressing process as disclosed in U.S. Pat. Nos. 5,898,009 and 6,048,511; boron nitride agglomerated powder as disclosed in U.S. Patent Publication No. 2005/0041373; boron nitride powder having high thermal diffusivity as disclosed in U.S. Patent Publication No. 2004/0208812A1; and highly delaminated boron nitride powder as disclosed in U.S. Pat. No. 6,951,583. These also include boron nitride particles of the platelet morphology.

In another embodiment, the boron nitride powder is in the form of spherical agglomerates of hBN platelets. In one embodiment of spherical boron nitride powder, the agglomerates have an average agglomerate size distribution (ASD) or diameter from about 10 µm to about 500 µm. In another embodiment, the boron nitride powder is in the form of spherical agglomerates having an ASD in the range of about 30 µm to about 125 µm. In one embodiment, the ASD is about 74 to about 100 microns. In another embodiment, about 10 µm to about 40 µm.

In one embodiment, the boron nitride powder is in the form of platelets having an average length along the b-axis of at least about 0.1 micron, (1 micron equals to 1 micrometer) and typically between about 0.1 µm and 100 µm, and a thickness of no more than about 5 microns. In another embodiment, the powder is in the form of platelets having an average aspect ratio of from about 5 to about 1000.

In one embodiment, the boron nitride particles comprise hBN platelets having an aspect ratio of from about 5 to about 1000. In another embodiment, the boron nitride particles have an oxygen content from 0.2 to 10 wt. %. In another embodiment, the hBN particles have a graphitization index of less than 25. In one embodiment, the boron nitride may be turbostratic boron nitride without a defined graphitization index.

In one embodiment, the boron nitride particles comprise hexagonal boron nitride powders having an average primary particle (crystallite) size of about 0.1 µm to about 20.0 µm, about 0.1 µm to about 15 µm; about 0.1 µm to about 10 µm, about 0.5 µm to about 15 µm, about 0.5 µm to about 10 µm; about 1.0 µm to about 20.0 µm, about 1.0 µm to about 15 µm, about 1.0 µm to about 10 µm.

In one embodiment, the boron nitride loading in the release agent is about 0.1 wt.% to about 50 wt. %, 5 wt. % to about 45 wt. %, 10 wt. % to about 40 wt. %, or 15 wt. % to about 35 wt. %. of the total weight of the release agent. In on e embodiment, the boron nitride loading is from about 0.1 to about 30 wt.%; 1 to 20 wt. %; even 5 to 15 wt. % of the total weight of the release agent. Here, as elsewhere in the specification and claims, numerical values can be combined to form new and non-disclosed ranges.

Silica and/or alumina particles having a relatively high surface area in the composition result in a better dispersion stability. In addition, it has also been found that the boron nitride loading can be significantly reduced with the use of the higher surface area fumed metal oxide particles. For example, in one embodiment, the fumed metal oxide particles have a surface area of from about 50 to about 400 m²/g, and the amount of boron nitride may be as low as about 10 wt.%, about 8 wt.%, about 6 wt.%, about 5 wt.%, even about 1 wt.%.

In one embodiment, the surface of the boron nitride powder may be treated. Examples of suitable materials for surface treatment of the boron nitride powder include, but are not limited to, silanes, siloxanes, organometallic compounds such as titanates and zirconates (e.g., Ken-react by Kenrich), aluminates, hyperdispersants (e.g., Solsperse by Lubrizol), maleated oligomers such as maleated polybutadiene resin or styrene maleic anhydride copolymer (Cray Valley), fatty acids or waxes and their derivatives such as ester and amides, and ionic or non-ionic surfactants. Examples of suitable silanes include, but are not limited to, an alkacryloxy silane, a vinyl silane, a chloro silane, a mercapto silane, a blocked mercapto silane, or a combination of two or more thereof. Examples of suitable siloxane fluids are Silsoft^{®} 876 (Siloxane Polyalkyleneoxide Copolymer), Silsoft^{®} 880 (a copolymer of polydimethylsiloxane and polyethyleneglycol), Silsoft^{®} spreader MAX (non -ionic organomodified carbosilane copolymer), Silquest A-187^{®} (gamma-glycidoxypropyltrimethoxysilane), Silquest^{®} A-1871 (gamma-glycidoxypropyltriethoxysilane), Silquest^{®} Wetlink 78, Silquest^{®} A1160 (gamma-Ureidopropyltrialkoxysilane (50% in methanol), Silquest^{®} A1524 (gamma-Ureidopropyltrimethoxysilane), Silquest^{®} A-Link 25 (gamma-Isocyanatopropyl-triethoxysilane), Silquest^{®} A-Link 35 (gamma-Isocyanatopropyltrimethoxysilane), A-1630A, Silquest^{®} A1102 (gamma-Aminopropyltriethoxysilane), Silquest^{®} A1106 (gamma-Aminopropyl-silsesquioxane), Silquest^{®} A1110 (gamma-Aminopropyl-trimethoxysilane, Siliquest^{™} A1120 (N-beta-(Aminoethyl)-gamma-aminopropyl-trimethoxysilane), or β (3,4-epoxycyclohexyl) ethyltriethoxysilane (CoatOSil^{®} 1770). In one embodiment, the release agent can comprise from about 1 to about 5 wt. % of a silane or siloxane fluid; from about 1.5 to about 4 wt.%; even from about 2.7 to about 3.7 wt. % of a silane or siloxane fluid.

In one embodiment, the boron nitride powder has an average particle size of about 0.05 µm to about 500 µm; from about 0.5 µm to about 250 µm; from about 1 µm to about 150 µm; from about 5 µm to about 100 µm; even from about 10 µm to about 30 µm. In one embodiment, the boron nitride powder has an average particle size of at least 50 µm. In one embodiment, the boron nitride powder comprises irregularly shaped agglomerates of hBN platelets, having an average particle size of above 10 µm. Here, as elsewhere in the specification and claims, numerical values can be combined to form new and non-disclosed ranges.

In one embodiment, the release agent is formed by mixing boron nitride powders with the fumed alumina dispersing the mixture in water. The mixture may be mixed using any suitable mixing method. In one embodiment, the mixture is mixed using an electronic mixer such as the Speedmixer^{™} (FlackTek, Inc.)

In one embodiment, the release agent further comprises a filler. A suitable filler includes, but is not limited to, talc, graphite, alumina (Al₂O₃), water-soluble phosphate, colloidal silica, colloidal alumina, water-soluble phosphate salt (e.g., water-soluble magnesium phosphate), a silicate (e.g. potassium silicate, magnesium aluminum silicate) and/or molybdenum disulfide, SiO₂, ZnO, ZrO₂, CeO, TiO₂, mica, or a combination of two or more thereof.

In another embodiment, the release agent further comprises a wetting agent/rheology modifier in an amount of about 0.1 wt.% to about 30.0 wt.%, about 0.5 wt.% to about 20.0 wt.%, or about 1.0 wt.% to about 10.0 wt.%. In one embodiment, the wetting agent/rheology modifier is present in an amount of less than about 30.0 wt.%.; less than about 20.0 wt.%; less than about 10.0 wt.%, less than about 9.0 wt.%, less than about 8.0 wt.%, less than about 7.0 wt.%, less than about 6.0 wt.%, less than about 5.0 wt.%, or even less than about 2.0 wt.%

The wetting agent/rheology modifier may be a clay-based sedimentation preventing agent obtained by purifying a natural montmorillonite based clay mineral and reacting the purified clay mineral with an organic compound. In one embodiment, the wetting agent/rheology modifier may be selected from sodium silicate, magnesium silicate, calcium silicate, or bentonite.

In one embodiment, the wetting agent is a silane-based wetting agent. A silane-based wetting agent may be present in an amount of about 0.1 wt.% to about 5 wt.%, about 0.5 wt.% to about 4.5 wt.%, or about 1.0 wt.% to about 4.0 wt.%. In one embodiment, the silane-based wetting agent may be present in an amount of about 5 wt.%, 4 wt.%, 3 wt.%, 2 wt.%, or even 1 wt.%. Examples of suitable siloxane fluids are Silsoft^{®} 876 (Siloxane Polyalkyleneoxide Copolymer), Silsoft^{®} 880 (a copolymer of polydimethylsiloxane and polyethyleneglycol), Silsoft^{®} spreader MAX (non -ionic organomodified carbosilane copolymer), Silquest A-187^{®} (gamma-glycidoxypropyltrimethoxysilane), Silquest^{®} A-1871 (gamma-glycidoxypropyltriethoxysilane), Silquest^{®} Wetlink 78, Silquest^{®} A1160 (gamma-Ureidopropyltrialkoxysilane (50% in methanol), Silquest^{®} A1524 (gamma-Ureidopropyltrimethoxysilane), Silquest^{®} A-Link 25 (gamma-Isocyanatopropyl-triethoxysilane), Silquest^{®} A-Link 35 (gamma-Isocyanatopropyltrimethoxysilane), A-1630A, Silquest^{®} A1102 (gamma-Aminopropyltriethoxysilane), Silquest^{®} A1106 (gamma-Aminopropyl-silsesquioxane), Silquest^{®} A1110 (gamma-Aminopropyl-trimethoxysilane, Siliquest^{™} A1120 (N-beta-(Aminoethyl)-gamma-aminopropyl-trimethoxysilane), or β (3,4-epoxycyclohexyl) ethyltriethoxysilane (CoatOSil^{®} 1770). In one embodiment, the release agent can comprise from about 1 to about 5 wt. % of a silane or siloxane fluid; from about 1.5 to about 4 wt.%; even from about 2.7 to about 3.7 wt. % of a silane or siloxane fluid.

The release agent may optionally include a pigment to impart color to the release agent. The pigment may be chosen as desired to impart a desired color to the release agent. In one embodiment, the release agent is chosen from an inorganic pigment chosen from a rutile, spinel, hematite, or phosphate pigment. In embodiments the pigment is substantially free of chromium compounds including, for example, trivalent chromium, hexavalent chromium or combinations thereof.

Application of the release agent to the substrate of interest can be accomplished by any suitable method including, but not limited to, dipping, spraying, brushing, or rolling the release agent onto metal processing equipment including, but not limited to, mold surfaces, shot sleeves, transition plates, thimbles, ladles, launder joints, side wall dams, dummy blocks, billets, ingots, die bearings, shear blades, piercing mandrels, die surfaces, nozzles, degassing tubes and equipment, and thermocouple protection coatings. In one embodiment, the release agent is applied to die casting equipment. Spraying with standard compressed air sprayers and airless systems is particularly suitable for applying the coating.

The coating thickness of the release agent can be selected as desired. The present release agent allows for the use of relatively thin coatings, while still providing excellent release properties (e.g., low pull force). The desired thickness may depend on the particular metal processing application in which the release agent will be used. In one embodiment, the coating has a thickness of about 2 mil to about 20 mil (about 50 microns to about 500 microns). In one embodiment, the coating has a thickness of about 2 mil to about 8 mil (about 50 to about 200 microns). The release agent can be used full strength (undiluted) or diluted with water to a maximum of two parts water to one part coating. If diluting, the use of distilled or purified water is preferable.

In one embodiment, multiple coating layers of the release agent may be applied. The first coating layer comprises a primer or initial coating. This coating layer may be relatively thin (e.g., from about 0.01 mil to about 1 mil) and is applied evenly. After this first coating layer dries completely (typically 6 to 8 hours if air drying or 20 minutes hot air drying at 80°C), one or more additional coating layers may be applied to provide a coating of a desired thickness. Before applying the release agent, it is recommended that the parts of the device to be coated should be clean and free of rust, oil, and other contaminants.

In one embodiment, the coating may be diluted as needed.

In one embodiment, at least one additional coating layer may be applied if the coating is damaged by repeated use. Additional coating layers may be applied as needed based on the condition of the coating.

The release agent may be used in many metal processing applications. For example, the release agent may be useful for processes involving casting, extrusion, forging and forming, and metallurgy. The release agent may be used as a coating or part of a coating for metal processing equipment including, but not limited to molds, shot sleeves, transition plates, thimbles, ladles, launder joints, side wall arms, dummy blocks, billets, die bearings, shear blades, piercing mandrels, die surfaces, work piece coatings, nozzles, degassing tubes and equipment, thermocouple protection coatings, and slip agents. Examples, not in accordance with the invention

A release agent coating comprising 10 wt.% hexagonal BN, 1 wt.% fumed silica, and water was prepared and the pull force measured. Steel pins (rods) were coated with either a known die lubricant composed of a water and oil-based formulation containing about 1-40% graphite or the release agent coating described above. The coatings were applied using the dipping and spraying method.

To measure the pull force, a crucible was held in a fixture, inside a tensile tester. The rod was positioned at the desired level inside the crucible. In the pull-out experiment, the rod was initially lowered with the upper ram into the crucible and the end positioned 0.1 inch, 1 inch equals to 2.54 cm, from the bottom of the crucible. Molten low-iron A356.1 alloy at 1350°F +/-5°F (wherein the conversion to SI-Units is °C =(°F - 32)/1.8000) was then poured into the crucible and allowed to cool down to 750°F as measured by a thermocouple, at which time the tensile tester was turned on and the rod was pulled out from the solidified aluminum while recording the load. The tensile strength tester was capable of measuring a pull for of up to 5001bs (1 1b = 0.45359237 kg)

The pull force required to pull the rod coated with the known lubricant out from the solidified aluminum was more than 500 lbs. Because the tensile strength tester does not measure a pull force greater than 500 lbs, the exact pull force could not be determined. The pull force required to pull the rod coated with the new release agent was about 2 lbs. See Table 1 below.

**Table 1**

| Coating/Lubricant | Pull Force |
|---|---|
| Comparative Example Die Lubricant | > 500 lbs |
| Release Agent A: 10 wt.% hexagonal BN, 1 wt.% fumed silica, and water | 2 lbs |

## Claims

1. A release agent for metal processing equipment, the release agent comprising:
(a) boron nitride; and
(b) a fumed metal oxide chosen from fumed alumina, wherein the release agent is (i) undiluted, or (ii) dispersed in an aqueous carrier.

2. The release agent of claim 1, wherein the release agent comprises 0.1 to 50 wt.% boron nitride.

3. The release agent of any of claims 1-2, wherein the boron nitride is chosen from a hexagonal boron nitride, a platelet boron nitride, a boron nitride agglomerate, or a combination of two or more thereof.

4. The release agent of any of claims 1-3, wherein the release agent comprises the fumed metal oxide in an amount of 0.01 wt.% to 20 wt.%, preferably in an amount of from 0.1 wt.-% to 10 wt.%.

5. The release agent of any of claims 1-4, wherein the release agent further comprises a filler chosen from talc, graphite, alumina (Al₂O₃), water-soluble phosphate, colloidal silica, colloidal alumina, water-soluble phosphate salt, a silicate and/or molybdenum disulfide, SiO₂, ZnO, ZrO₂, CeO, TiO₂, mica, or a combination of two or more thereof.

6. The release agent of any of claims 1-5, which further comprises a pigment to impart color; optionally wherein the pigment is an inorganic pigment chosen from a rutile, spinel, hematite, or phosphate pigment; further optionally wherein the pigment is substantially free of chromium compounds.

7. A substrate defining a surface, the substrate comprising a coating of the release agent of any of claims 1-6 disposed on at least a portion of the surface.

8. The substrate of claim 7, wherein the coating has a thickness of from 50 microns (50 µm) to 500 microns (500 µm).

9. The substrate of claim 7, wherein the coating of the release agent comprises a plurality of coating layers.

10. The substrate of claim 7, wherein a coating comprises a first coating layer of the release agent, and a second coating layer of the release agent; optionally wherein the first coating layer has a thickness of from 0.25 to 25 microns (0.25 to 25 µm).

11. A method of forming a shaped metal article comprising:
providing an apparatus defining a mold cavity to form a shaped article, wherein a surface of the mold cavity comprises a coating of the release agent of any of claims 1-6;
supplying a metal to the mold cavity;
forming a shaped article; and
removing the article from the cavity.

12. The method of claim 11, wherein the metal comprises aluminum, iron, an iron aluminum alloy, or a combination of two or more thereof.

13. Use of the release agent of any of claims 1-6 in a metal processing application.

14. The use of the release agent in claim 13, wherein the release agent is applied as a coating on a mold, shot sleeve, transition plate, thimble, ladle, launder joint, side wall arm, dummy block, billet, die bearing, shear blade, piercing mandrel, die surface, work piece coating, nozzle, or degassing tube.

## Patentansprüche

1. Ein Trennmittel für Metallverarbeitungsgeräte, wobei das Trennmittel umfasst:
(a) Bornitrid; und
(b) ein pyrogenes Metalloxid, das aus pyrogenem Aluminiumoxid ausgewählt ist, wobei das Trennmittel (i) unverdünnt ist, oder (ii) in einem wässrigen Träger dispergiert ist.

2. Das Trennmittel gemäß Anspruch 1, wobei das Trennmittel 0,1 bis 50 Gew.-% Bornitrid umfasst.

3. Das Trennmittel gemäß einem der Ansprüche 1-2, wobei das Bornitrid aus hexagonalem Bornitrid, einem Plättchen-Bornitrid, einem Bornitrid-Agglomerat, oder einer Kombination von zweien oder mehr davon ausgewählt ist.

4. Das Trennmittel gemäß einem der Ansprüche 1-3, wobei das Trennmittel das pyrogene Metalloxid in einer Menge von 0,01 Gew.-% bis 20 Gew.-%, bevorzugt in einer Menge von 0,1 Gew.-% bis 10 Gew.-%, umfasst.

5. Das Trennmittel gemäß einem der Ansprüche 1-4, wobei das Trennmittel darüber hinaus einen Füllstoff umfasst, der aus Talk, Graphit, Aluminiumoxid (Al₂O₃), wasserlöslichem Phosphat, kolloidalem Siliciumdioxid, kolloidalem Aluminiumoxid, wasserlöslichen Phosphatsalz, einem Silikat und/oder Molybdändisulfid, SiO₂, ZnO, ZrO₂, CeO, TiO₂, Glimmer, oder einer Kombination von zweien oder mehr davon ausgewählt ist.

6. Das Trennmittel gemäß einem der Ansprüche 1-5, welches darüber hinaus ein Pigment zum Verleihen von Farbe enthält; wobei es sich wahlweise bei dem Pigment um ein anorganisches Pigment handelt, das aus einem Rutil-, Spinell-, Hämatit- oder Phosphatpigment ausgewählt ist; wobei das Pigment darüber hinaus wahlweise im wesentlichen frei von Chromverbindungen ist.

7. Ein Substrat, das eine Oberfläche definiert, wobei das Substrat eine Beschichtung mit dem Trennmittel gemäß einem der Ansprüche 1-6 umfasst, auf mindestens einem Teil der Oberfläche umfasst.

8. Das Substrat gemäß Anspruch 7, wobei die Beschichtung eine Dicke von 50 Mikron (50 µm) bis 500 Mikron (500 µm) aufweist.

9. Das Substrat gemäß Anspruch 7, wobei die Beschichtung mit dem Trennmittel eine Mehrzahl von Beschichtungsschichten umfasst.

10. Das Substrat gemäß Anspruch 7, wobei die Beschichtung eine erste Beschichtungsschicht des Trennmittels umfasst, und eine zweite Beschichtungsschicht des Trennmittels; wobei wahlweise die erste Beschichtungsschicht eine Dicke von 0,25 bis 25 Mikron (0,25 bis 25 µm) aufweist.

11. Ein Verfahren zur Bildung eines geformten Metallgegenstandes, das umfasst:
Das Bereitstellen einer Vorrichtung, die einen Formhohlraum zur Bildung eines geformten Gegenstandes definiert, wobei eine Oberfläche des Formhohlraumes eine Beschichtung mit dem Trennmittel gemäß einem der Ansprüche 1-6 umfasst;
Das Zuführen eines Metalls in den Formhohlraum;
Die Bildung eines geformten Gegenstandes; und
Das Entfernen des Gegenstandes aus dem Formhohlraum.

12. Das Verfahren gemäß Anspruch 11, wobei das Metall Aluminium, Eisen, eine Eisen-Aluminium-Legierung, oder eine Kombination von zweien oder mehr davon umfasst.

13. Die Verwendung des Trennmittels gemäß einem der Ansprüche 1-6 in einer Metallverarbeitungsanwendung.

14. Die Verwendung des Trennmittels gemäß Anspruch 13, wobei das Trennmittel als eine Beschichtung auf eine Form, eine Schusshülse, eine Übergangsplatte, ein Fingerhutrohr, eine Pfanne, ein Rinnenverbindungsstück, einen Formwandarm, eine Pressscheibe, einen Block, ein Presswerkzeug, ein Scherblatt, einen Lochstempel, eine Formoberfläche, eine Werkstückbeschichtung, eine Düse oder ein Entgasungsrohr aufgebracht wird.

## Revendications

1. Agent de démoulage pour un équipement de traitement de métaux, l'agent de démoulage comprenant :
(a) un nitrure de bore ; et
(b) un oxyde métallique sublimé choisi parmi l'alumine sublimée, dans lequel l'agent de démoulage est (i) non dilué, ou (ii) dispersé dans un support aqueux.

2. Agent de démoulage selon la revendication 1, dans lequel l'agent de démoulage comprend 0,1 à 50% en poids de nitrure de bore.

3. Agent de démoulage selon l'une des revendications 1 et 2, dans lequel le nitrure de bore est choisi parmi un nitrure de bore hexagonal, un nitrure de bore en plaquette, un agglomérat de nitrure de bore, ou une combinaison de deux ou plus de ceux-ci.

4. Agent de démoulage selon l'une des revendications 1 à 3, dans lequel l'agent de démoulage comprend l'oxyde métallique sublimé en une quantité allant de 0,01 % en poids à 20% en poids, de préférence en une quantité allant de 0,1% en poids à 10% en poids.

5. Agent de démoulage selon l'une des revendications 1 à 4, dans lequel l'agent de démoulage comprend en outre une charge choisie parmi le talc, le graphite, l'alumine (Al₂O₃), le phosphate hydrosoluble, la silice colloïdale, l'alumine colloïdale, un sel de phosphate hydrosoluble, un bisulfure de silicate et/ou de molybdène, SiO₂, ZnO, ZrO₂, CeO, TiO₂, le mica, ou une combinaison de deux ou plus de ceux-ci.

6. Agent de démoulage selon l'une des revendications 1 à 5, qui comprend en outre un pigment de coloration ; éventuellement dans lequel le pigment est un pigment minéral choisi parmi un pigment rutile, spinelle, hématite ou phosphate ; en outre éventuellement dans lequel le pigment est sensiblement exempt de composés de chrome.

7. Substrat définissant une surface, le substrat comprenant un revêtement de l'agent de démoulage selon l'une des revendications 1 à 6 disposé sur au moins une partie de la surface.

8. Substrat selon la revendication 7, dans lequel le revêtement a une épaisseur comprise entre 50 microns (50 µm) et 500 microns (500 µm).

9. Substrat selon la revendication 7, dans lequel le revêtement de l'agent de démoulage comprend une pluralité de couches de revêtement.

10. Substrat selon la revendication 7, dans lequel un revêtement comprend une première couche de revêtement de l'agent de démoulage, et une deuxième couche de revêtement de l'agent de démoulage ; facultativement dans lequel la première couche de revêtement a une épaisseur allant de 0,25 à 25 microns (0,25 à 25 µm).

11. Procédé de formation d'un article métallique profilé comprenant :
la fourniture d'un appareil définissant une cavité de moule pour former un article profilé, dans lequel une surface de la cavité de moule comprend un revêtement de l'agent de démoulage selon l'une des revendications 1 à 6 ;
la fourniture d'un métal à la cavité du moule ;
la formation d'un article profilé ; et
le retrait de l'article de la cavité.

12. Procédé selon la revendication 11, dans lequel le métal comprend l'aluminium, le fer, un alliage fer-aluminium, ou une combinaison de deux ou plus de ceux-ci.

13. Utilisation de l'agent de démoulage selon l'une des revendications 1 à 6 dans une application de traitement de métaux.

14. Utilisation de l'agent de démoulage selon la revendication 13, dans laquelle l'agent de démoulage est appliqué en tant que revêtement sur un moule, un cylindre d'injection, une plaque de transition, une cuve à laitier, une poche de coulée, un raccord pour chenal de coulée, un barrage de paroi latérale, un grain de poussée, une billette, un porte-filières, une lame de cisaille, un mandrin de perçage, une surface de matrice, un revêtement de pièce, une buse ou un tube de dégazage.
